## Europäisches Patentamt
## European Patent Office
## Office européen des brevets

(19)

(11) Numéro de publication: **0 020 273**
**B1**

(12)

# FASCICULE DE BREVET EUROPEEN

(45) Date de publication du fascicule du brevet: **22.12.82**

(21) Numéro de dépôt: **80400766.4**

(22) Date de dépôt: **30.05.80**

(51) Int. Cl.³: **C 08 L 21/00, F 42 B 9/16, F 02 K 9/34 //(C08L21/00, 77/10)**

(54) **Protection thermique pour propulseurs à poudre, exempte d'amiante.**

(30) Priorité: **05.06.79 FR 7914262**

(43) Date de publication de la demande:
**10.12.80 Bulletin 80/25**

(45) Mention de la délivrance du brevet:
**22.12.82 Bulletin 82/51**

(84) Etats contractants désignés:
**DE GB IT**

(56) Documents cités:
FR - A - 2 136 979
FR - A - 2 388 016

JOURNAL OF THE INSTITUTION OF THE
RUBBER INDUSTRY, vol. 3, no. 1, 1969,
Rubber Techn. Press Lim., Londres
GB A. R. SHALDERS: "The development of
elastomeric formulations to withstand
extremely high temperatures and pressures",
pages 25—28

H. F. MARK and N. M. BIKALES: "Encyclopedia
of polymer science and technology", Supplem.
Vol. 2, (1977), Interscience, page 110
New York US

(73) Titulaire: **SOCIETE NATIONALE DES POUDRES ET EXPLOSIFS**
**12, quai Henri IV**
**F-75181 Paris Cedex 04 (FR)**

(72) Inventeur: **Tauzia, Jean-Michel**
**26, rue du Queyron**
**Caychac F-33290 Blanquefort (FR)**
Inventeur: **Maucourt, Jacques**
**Résidence Beau Site - Bât. A. Entrée 1**
**Avenue de la Mairie F-33700 Merignac (FR)**

Courier Press, Leamington Spa, England.

# 0 020 273

## Protection thermique pour propulseurs à poudre, exempte d'amiante

L'invention concerne une protection thermique exempte d'amiante destinée à protéger les parois internes des propulseurs à poudre lors de l'émisson des gaz chauds produits par la combustion des blocs de propergols.

On connaît les protections thermiques qui comportent, en plus d'un caoutchouc synthétique servant de liant, une proportion plus ou moins importante d'amiante en fibre et, éventuellement, des charges réfractaires et des composés chimiques à décomposition endothermique.

Dans le cas de vitesse de passage des gaz de combustion élevée, l'amiante joue le rôle essentiel de permettre l'accrochage de matériau qui est en train de se transformer en carbone à la surface du matériau vierge, réalisant ainsi une croute poreuse et charbonneuse nécessaire à la protection en profondeur du matériau.

Les avantages procurés par l'amiante vis à vis d'autres matériaux de charge, et notamment vis à vis des fibres organiques, sont bien illustrés par le brevet US 3 347 047.

Les fibres orgnaniques sont en effet transformées en carbone sous l'effet des gaz chauds et ne peuvent donc assurer l'accrochage du caoutchouc synthétique qui est en train de se transformer en carbone.

Toutefois, on connaît les graves dangers que peut faire courir l'amiante aux personnes qui sont appelées à le manipuler.

Le but de l'invention est donc de fournir une protection thermique exempte d'amiante et qui présente, néanmoins, sensiblement les mêmes qualités de résistance á l'ablation que les protections thermiques comportant de l'amiante.

De manière surprenante la demanderesse a trouvé qu'il était possible d'obtenir ce résultat en utilisant un matériau de charge à base de silice et d'une fibre organique particulière.

Selon la présente invention, la protection thermique exempte d'amiante utilisée dans les propulseurs à poudre est constituée essentiellement de 100 parties en poids de caoutchouc synthétique et de 50 à 150 parties en poids d'un matériau de charge et est caractérisée en ce que le matériau de charge est à base de silice et de fibres de polyamide aromatique et en ce qu'elle contient au moins 15 parties en poids desdites fibres.

L'invention n'est pas limitée à un type de caoutchouc synthétique particulier. Il est toutefois nécessaire que ces caoutchouc soient forme de gomme et non à l'état liquide.

On peut citer à titre indicatif les terpolymères hydrocarbonés à base d'éthylène, de propyléne et de butadiène, par exemple, ou les silicones ou les Néoprènes. De nombreux caoutchoucs synthétiques convenant pour la présente invention sont décrits dans les brevets GB 1 030 155 et 1 176 349.

Les fibres de polyamide aromatique selon l'invention soit décrites dans "Encyclopedia of Polymer Science and Technology", Supplement vol. 2, pages 84 à 86.

Pour des raisons de facilité de mise en oeuvre, notamment au niveau du malaxage, il est préférable de ne pas utiliser plus de 35 parties en poids de fibres de polyamide aromatique pour 100 parties de caoutchouc synthétique.

On utilisera avantageusement une quantité de fibres de polyamide aromatique comprise entre 18 et 22 parties en poids pour 100 parties de caoutchouc synthétique.

Pour les mêmes raisons de facilité de mise en oeuvre on emploiera avantageusement un taux de silice inférieur à 90 parties en poids pour 100 parties de caoutchouc synthétique et, dans un mode préférentiel, une quantité comprise entre 45 et 55 parties en poids.

La silice peut être indifféremment sous forme de fibre ou en poudre étant donné que les fibres de silice sont transformées en poudre lors de la mise en oeuvre. Pour des raisons pratiques, il est donc préférable mais non nécessaire, d'utiliser directement la silice sous forme de poudre.

Les fibres de polyamide aromatique qui peuvent être utilisées sont de longueur variable. Cette longueur est toutefois limitée par les difficultés de mise en oeuvre que présente l'emploi de fibres trop longues. Dans les exemples que l'on trouvera ci-aprés, des fibres de 6 mm et de 13 mm ont été utilisées.

Afin d'améliorer la tenue thermique de la protection, il est avantageux d'adjounter une quantité pouvant aller jusqu'à 100 parties en poids, pour 100 parties de caoutchouc synthétique, d'un composé chimique à décomposition endothermique.

Parmi ces composés chimiques, on peut citer à titre indicatif l'oxalate de calcium, l'hydroxyde d'aluminium ou l'hydroxyde de calcium.

Des exemples de formulations de protection thermique selon l'invention sont donnés ci-dessous.

On donne à titre de comparaisons trois autres formulations comportant comme matériau de charge respectivement de l'amiante, du chlorure de polyvinyle et de la silice uniquement.

# 0 020 273

A — *Exemples de formulations selon l'invention (en parties en poids)*

Formulation I

| | |
|---|---|
| Néoprène WRT (fourni par la Sté Dupont de Nemours) | 100 |
| Fibres de silice | 100 |
| Fibres de Kevlar® de 13 mm Poly(p-phénylenè térephthalamide) fourniers par la Sté Dupont de Nemours | 20 |
| Alumine hydratée | 20 |
| Noir de carbone | 2 |
| Ditertiobutylparacresol | 1 |
| Agent d'adhésion liant charge | 1 |
| Acide stéarique | 1 |
| Agents de vulcanisation | 9 |
| Ethylène thiourée | 0,5 |

Formulation II

| | |
|---|---|
| Néoprène WRT | 100 |
| Poudre de silice | 50 |
| Fibres de Kevlar de 6 mm® | 20 |
| Oxalate de calcium | 20 |
| Ditertiobutylparacrésol | 1 |
| Acide stéarique | 1 |
| Agents de vulcanisation | 9 |
| Plastifiant PBHT R 45 M (fourni par la Société ARCO CHEMICAL) | 15 |
| Vulcaflor 322 (fourni par la Société VULNAX) | 1,5 |

Formulation III

| | |
|---|---|
| Néoprène WRT | 100 |
| Poudre de silice | 50 |
| Fibres de kevlar de 6 mm® | 20 |
| Alumine hydratée | 20 |
| Noir thermique (renforce les propriétés mécaniques) | 100 |
| Ditertiobutylparacrésol | 1 |
| Plastifiant PBHT | 15 |
| Acide stéarique | 1 |
| Agents de vulcanisation | 9 |
| Vulcaflor 322 | 0,5 |

B — *Essais comparatifs*

Formulation IV (à base d'amiante)   .en parties en poids

| | |
|---|---|
| Butachlor Sc 22 qui est néoprène fourni par la Sté française RHONE—POULENC | 100 |
| Alumine hydratée | 20 |
| Noir thermique | 2 |
| Fibres d'amiante | 50 |
| Ditertiobutylparacrésol | 1 |
| Plastifiant | 7,5 |
| Acide stéarique | 1 |
| Agents de vulcanisation | 9 |

Formulation V (à base de PVC)

| | |
|---|---|
| Néoprène WRT | 100 |
| Poudre de silice | 50 |
| Oxalate de calcium | 20 |
| | 40 |
| Ditertiobutylparacrésol | 1 |
| Plastifiant | 15 |
| Acide stéarique | 1 |
| Agents de vulcanisation | 9 |
| Vulcaflor 322 | 1,5 |

3

**0 020 273**

Formulation VI (à base de silice)

| | |
|---|---|
| Néoprène WRT | 100 |
| Fibres de silice | 100 |
| Alumine hydratée | 20 |
| Noir de carbone | 2 |
| Ditertiobutylparacrésol | 1 |
| Agent de liaison liant-charge | 1 |
| Acide stéarique | 1 |
| Agents de vulcanisation | 9 |
| Ethyléne thiourée | 0,5 |

Pour réaliser ces matériaux, on effectue le mélange des différents constituants de maniére connue. On moule ensuite le mélange dans un moule selon la forme désirée.

La vulcanisation est effectuée pendant 1 h à 150°C.

Bien évidemment, les conditions de moulage et de vulcanisation devront être adaptées aux mélanges utilisés dans chaque cas particulier.

On donne ci-aprés les caractéristiques de certains des matériaux ainsi obtenus à 20°C.

| Formulation | Sm en bar | $\varepsilon$ % | E bars | em % | er % |
|---|---|---|---|---|---|
| II | 57,2 | 16,5 | 347,6 | 103,6 | 113,3 |
| III | 61,8 | 6,0 | 1 070,5 | 32,2 | 33,9 |
| IV | 592 | 23,0 | 258,9 | 118,5 | 121,6 |
| V | 52,5 | 14,8 | 361,3 | 132,6 | 136,7 |

Sm traction maximum
E% allongement élastique
E module d'young
em allongement maximum
er allongement à la rupture

Ces matériaux sont compatibles avec les blocs de propergol entre −40°C et +60°C et sont utilisables pour tous les propulseurs à poudre munis de propergols composites ou de propergols homogènes.

Afin de renforcer l'adhésion du bloc de propergol à la protection thermique, il est nécessaire d'utiliser un inhibiteur ou un caoutchouc de liaison. Ces adhésifs sont bien connus de l'homme de métier. On peut citer par exemple les élastomères de polyuréthanne.

La résistance à l'ablation des protections thermiques dont les formulations sont décrites ci-dessus a été testé dans un convergent de tuyère à section hexagonale variable, par passage des gaz de combustion générés par un bloc de propergol, placé en amont du convergent, aprés qu'elles aient été collées sur les parois métalliques intérieures du convergent de la tuyére.

Les conditions de tir sont les suivantes:

| | |
|---|---|
| Pressions en bars | 70 |
| Température des gaz | 3200°C |
| Débit des gaz | 6 kg/s |
| Durée du tir | 7,0 s |

Les résultats obtenus au cours des tirs sont exprimés en épaisseur ablatée par seconde (vitesse d'ablation).

On appelle épaisseur ablatée la différence entre l'épaisseur initiale du mateiau et l'épaisseur du matériau sain après tir (dans le cas où il a formation d'une croute charbonneuse, on l'enlève jusqu'a obtenir le matériau sain).

4

| For-mulation \ Vitesse de passage des gaz en Mach (m/s) | 0,035 (11,8) | 0,055 (18,5) | 0,075 (25,2) | 0,1 (33,6) |
|---|---|---|---|---|
| I | 0,24 | 0,32 | 0,48 | 0,52 |
| II | 0,25 | 0,33 | 0,48 | 0,54 |
| III | 0,23 | 0,34 | 0,50 | 0,55 |
| IV | 0,23 | 0,31 | 0,44 | 0,49 |
| V | 0,26 | 0,55 | 0,85 | 1,1 |
| VI | 0,35 | 1,2 | 1,6 | 1,85 |

**Revendications**

1. Protection thermique exempte d'amiante utilisée dans les propulseurs à poudre constituée essentiellement de 100 parties en poids de caoutchouc synthétique et de 50 à 150 parties en poids d'un matériau de charge et caractérisée en ce que le matériau de charge est à base de silice et de fibres de polyamide aromatique et en ce qu'elle contient au moins 15 parties en poids desdites fibres.

2. Protection thermique exempte d'amiante selon la revendication 1 caractérisée en ce qu'elle contient au plus 35 parties en poids de fibres de polyamide aromatique.

3. Protection thermique exempte d'amiante selon la revendication 2 caractérisée en ce qu'elle contient 18 à 22 parties de fibres de polyamide aromatique.

4. Protection thermique exempte d'amiante selon l'une quelconque des revendications précédentes caractérisée en ce qu'elle contient une quantité de silice inférieure ou égale à 90 parties en poids.

5. Protection thermique exempte d'amiante selon la revendication 4 caractérisée en ce qu'elle contient 45 à 55 parties de silice.

6. Protection thermique exempte d'amiante selon l'une quelconque des revendications précédentes caractérisée en ce qu'elle contient en outre jusqu'à 100 parties en poids d'un composé chimique à décomposition endothermique.

**Claims**

1. An asbestos-free heat shield for use in powder propulsion systems consisting essentially of 100 parts by weight of synthetic rubber and from 50 to 150 parts by weight of a filler material and characterised in that the filler material is comprised of silica and aromatic polyamide fibres and in that it contains at least 15 parts by weight of said fibres.

2. An asbestos-free heat shield according to claim 1 characterised in that it contains at most 35 parts by weight of aromatic polyamide fibres.

3. An asbestos-free heat shield according to claim 2 characterised in that contains 18 to 22 parts of aromatic polyamide fibres.

4. An asbestos-free heat shield according to any one of the preceding claims characterised in that it contains a quantity of silica less than or equal to 90 parts by weight.

5. An asbestos-free heat shield according to claim 4 characterised in that it contains 45 to 55 parts of silica.

6. An asbestos-free heat shield according to any one of the preceding claims characterised in that it also contains up to 100 parts by weight of a chemical compound which undergoes endothermic decomposition.

**Patenansprüche**

1. Asbestfreie Zusammensetzung zur Innenauskleidung von Festtreibstofftriebwerken, die im wesentlichen aus 100 Gew.-Teilen eines synthetischen Kautschuks und 50 bis 150 Gew.-Teilen eines Füllstoffs besteht, gekennzeichnet durch - einen Füllstoff auf der Basis von Kieselsäure sowie von Fasern aus einem aromatischen Polyamid und - einen Gehalt von mindestens 15 Gew.-Teilen der Fasern.

2. Asbestfreie Zusammensetzung nach Anspruch 1, dadurch gekennzeichnet, daß sie höchstens 35 Gew.-Teile Fasern aus einem aromatischen Polyamid enthält.

3. Asbestfreie Zusammensetzung nach Anspruch 2, dadurch gekennzeichnet, daß sie 18 bis 22 Gew.-Teile Fasern aus einem aromatischen Polyamid enthält.

4. Asbestfreie Zusammensetzung nach einem der Ansprüche 1 bis 3, dadurch gekennzeichnet, daß die Menge an Kieselsäure ≤ 90 Gew.-Teile beträgt.

5. Asbestfreie Zusammensetzung nach Anspruch 4, dadurch gekennzeichnet, daß sie 45 bis 55 Gew.-Teile Kieselsäure enthält.

6. Asbestfreie Zusammensetzung nach einem der Ansprüche 1 bis 5, dadurch gekennzeichnet, daß sie ferner bis zu 100 Gew.-Teile einer chemischen Verbindung mit endothermer Zersetzung enthält.